# EUROPEAN PATENT APPLICATION

(11) **EP 3 299 068 A1**
(43) Date of publication of application: **28.03.2018**
(21) Application number: 17000823.9
(22) Date of filing: 12.05.2017
(51) Int. Cl.: A63B 41/02, A63B 43/00, A63B 45/00, H02J 7/02

(54) **AN INTELLIGENT BALL WITH MULTIPLE AIRBAGS AND A MANUFACTURING METHOD THEREOF**

(30) Priority: 27.09.2016 CN 201610852463
(71) Applicant: Gengee Technology Co., Ltd., Fujian 361000 (CN)
(72) Inventor: GUO, Daishuo, Fujian, 361000 (CN); HAN, Buyong, Fujian, 361000 (CN); LUO, Xiangwang, Fujian, 361000 (CN); Zhang, Yelei, Fujian, 361000 (CN); WU, Jiancheng, Fujian, 361000 (CN)
(74) Representative: Verscht, Thomas Kurt Albert

(57) **Abstract**

The present invention is provided with an intelligent ball with multiple airbags that the inner container is disposed with inner films, the inner film is used to fix the electric pieces. The electric pieces are clamped by the connecting of the inner film and the encasing film, such that the electric pieces are assembled in the ball, particularly at the central position of the inner container even in the center, such that the ball doesn't need to weight balance, the weight center is balanced. The electric pieces needn' t to bonded between the inner film and the encasing film, the manufacturing steps are reduced, the manufacturing efficiency is improved. The present invention further provides with a manufacturing method that the inner container is manufactured by overlapping and bonding, the inner films, the inner film and the encasing film, the ball surfaces, the recharging component and the inner container are respectively high frequency bonded therebetween to achieve fast and stable bonding effect, and to avoid damaging the electric pieces due to high temperature during manufacturing, the safety factor is improved.

## Description

### Field of the invention

The present invention relates to balls, particularly to an intelligent ball with multiple airbags and a manufacturing method thereof.

### Background of the invention

Electric pieces are disposed in the ball to achieve different and various functions to satisfy the needs of the user to the balls, but as the interior of the ball is a chamber, the electric pieces are difficult to fix; if the electric pieces are fixed to the interior surface of the inner container, they are protruding out of the surface, after long time' s use, for example, bouncing the basketball, the volleyball or knitting the football, the shaking accumulates, the electric pieces come off easily due to considerable shaking, thus influencing the service life. In addition, the electric pieces are arranged bias, weight balance is needed for high requirement balls, thus increasing the manufacturing difficulty and influencing the manufacturing efficiency.

In traditional technology, the balls, for example, basketball or football, are disposed with sensor and necessary circuit modules to collect the motion data. As the ball inner container is formed by vulcanization in high temperature, high temperature damages battery even results in explosion. Therefore, in traditional technology of manufacturing a ball with built-in circuit and battery, the inner container is firstly vulcanized and then the battery is put into a fixing position of the ball, and is wrapped by a leather layer to form the ball body. Said manufacturing method makes the ball body with weak elasticity in the fixing position, the normal usage of the ball is influenced.

### Summary of the invention

The present invention is provided with an intelligent ball with multiple airbags and electric pieces that is of stable assembly and simple weight balance and the elasticity thereof is not influenced, and a manufacturing method of the ball of simple operation.

The technical proposal of the present invention is that:
An intelligent ball with multiple airbags, comprising an inner container, an outer leather layer, wherein the inner container is disposed with at least two inner films, the inner container comprises a plurality of ball surfaces, the inner films are connected to an integral structure along the center line to form a plurality of film sheets of radial shape along the center line, two adjacent film sheets are connected by a ball surface, all the ball surfaces form the ball inner container; the electric pieces are disposed on the surface of the inner film, an encasing film is bonded to the surface of the inner film with the electric pieces; the electric pieces are positioned between the inner film and the encasing film; the recharging component is connected to the electric pieces by wires, an air nozzle and the recharging component are respectively disposed to the inner container.

In another preferred embodiment, the edge of the inner film is completely contacted with the inner container, the inner film is disposed with a plurality of air holes, the encasing film is disposed with coinciding air holes correspondingly.

In another preferred embodiment, air gaps are formed between the edge of the inner film and the inner container.

In another preferred embodiment, the electric pieces are patch structure, the battery is arranged at the periphery or the bottom surface of the circuit board.

In another preferred embodiment, the electric pieces are not connected nor fixed to the inner film or the encasing film but are positioned by the clamp of the inner film and the encasing film.

In another preferred embodiment, the encasing film is contacted with the periphery of the inner film and forming an assembly chamber, the electric pieces are disposed in the assembly chamber.

In another preferred embodiment, the recharging component is an induction coil for wireless recharging, the surface of the inner container is concaved with an assembly hole, the induction coil is positioned in the assembly hole.

In another preferred embodiment, the recharging component is a recharging joint, the inner container is disposed with a fixing base extending inwardly, the recharging joint is disposed in the fixing base; the surface of the fixing base is lower than the external surface of the inner container and forming a concave hole, the concave hole is assembled with an elastic plug cover.

A manufacturing method of an intelligent ball with multiple airbags, wherein comprising following steps:
1) connecting a plurality of inner films along the center line, forming multiple film sheets of radial shape when open;
2) putting electric pieces on the inner film, contacting an encasing film on one side of the electric pieces, positioning the electric pieces between the inner film and the encasing film; positioning air nozzle and recharging component to a ball surface; connecting the recharging component and the electric pieces by wires;
3) putting the ball surface between two adjacent film sheets, connecting the ball surfaces along the edges, the edge of the inner film is connected to the connecting position of two adjacent ball surfaces;
4) inflating the ball inner container obtained from step 3), wrapping a leather layer.

In another preferred embodiment, in step 2), the edge of the inner film is completely contacted with the inner container; the inner film is disposed with a plurality of air holes, the encasing film is disposed with coinciding air holes correspondingly; or in step 2), air gap is formed between the edge of the inner film and the inner container.

In another preferred embodiment, in step 2), the encasing film is contacted with the periphery of the inner film and forming an assembly chamber, the electric pieces are disposed in the assembly chamber; after the electric pieces and the recharging component are connected by wire, proceeding step 3).

In another preferred embodiment, the recharging component is an induction coil for wireless recharging, the surface of the inner container is concaved with an assembly hole, the induction coil is positioned in the assembly hole.

In another preferred embodiment, the recharging component is a recharging joint, the inner container is disposed with a fixing base extending inwardly, the recharging joint is disposed in the fixing base; the surface of the fixing base is lower than the external surface of the inner container and forming a concave hole, the concave hole is assembled with an elastic plug cover.

In another preferred embodiment, the inner films, the inner film and the encasing film, the ball surfaces, the recharging component and the inner container are respectively high frequency bonded therebetween.

The present invention has advantages:
The intelligent ball with multiple airbags of the present invention is provided that the inner container is disposed with inner films, the inner film is used to fix the electric pieces. The electric pieces are clamped by the connecting of the inner film and the encasing film, such that the electric pieces are assembled in the ball, particularly at the central position of the inner container even in the center, such that the ball doesn't need to weight balance, the weight center is balanced. The electric pieces needn' t to be bonded between the inner film and the encasing film, the manufacturing steps are reduced, the manufacturing efficiency is improved.

When the recharging component applies wireless recharging, the inner surface of the inner container is assembled with induction coil, the exterior of the ball is integral; when the recharging component applies wired recharging, the embedded recharging joint is assembled to the fixing base of the inner container, the elastic plug cover solves the problem that the elasticity of the ball is weak at the position of the fixing base; it not only solves the problem of continuous recharging, but also makes no influence to the elasticity of the ball, ensuring the stable elasticity of the ball. In the present invention, the structure and assembly method of the recharging component not only solves the problem of continuous recharging, but also makes no influence to the elasticity of the ball, ensuring the stable elasticity of the ball.

The present invention further provides with a manufacturing method that the inner container is manufactured by overlapping and bonding, the inner films, the inner film and the encasing film, the ball surfaces, the recharging component and the inner container are respectively high frequency bonded therebetween to achieve fast and stable bonding effect, and to avoid damaging the electric pieces due to high temperature during manufacturing, the safety factor is improved.

### Brief description of the drawings

FIG.1 illustrates a schematic diagram of the inner film.
FIG.2 illustrates a schematic diagram of the present invention applying wireless recharging.
FIG.3 illustrates a schematic diagram of the present invention applying wired recharging.
FIG.4 illustrates a schematic diagram of the connecting of two inner films.
FIG.5 illustrates a schematic diagram of the ball surface disposed with air nozzle.
FIG.6 illustrates a schematic diagram of the ball surface disposed with recharging component.
FIG.7 illustrates a schematic diagram of a part of ball surfaces bonded, the recharging component is an induction coil.

Reference signs: inner container 10, ball surface 11, inner film 12, encasing film 13, air hole 14, assembly chamber 15, wire 16, induction coil 17, recharging joint 18, air nozzle 19, assembly hole 20, fixing base 21, concave hole 22, elastic plug cover 23, electric piece 30.

### Detailed description of the embodiments

The present invention will be further described with the drawings and the embodiments.

The present invention solves the problem of the traditional technology that the electric pieces are fixed with bad effect, the service life is short, the manufacturing method is complicated and there is existential risk. The present invention is provided with an intelligent ball with multiple airbags and a manufacturing method thereof. The inner films are disposed at the center of the ball inner container, the electric pieces can be arranged at the center of the inner film, such that the electric pieces are assembled stably, the weight balancing is omitted. In the present invention, the structure and the assembly of recharging component solve the continuous charging problem and the elasticity of the ball is not influenced, thus ensuring the stability of the ball.

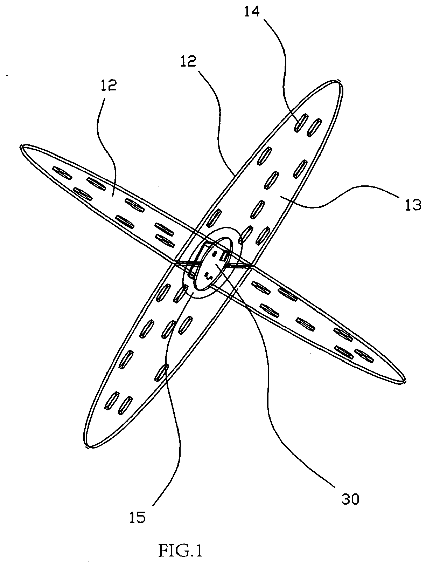

The intelligent ball with multiple airbags comprises an inner container 10 and an external leather, the inner container 10 comprises a plurality of ball surfaces 11, the inner container 10 is disposed with at least two inner films 12, as figured in FIG.1, the inner films 12 are connected to an integral one along the center line, forming radial shape along the center line; if the films are open evenly, a cross support is formed. In this embodiment, there are two inner films 12, such that the cross support is X shaped. The electric pieces 30 are disposed on the surface of the inner film, an encasing film 13 is bonded to the surface of the inner film 12 with the electric pieces 30; the electric pieces 30 are positioned between the inner film 12 and the encasing film 13. The electric pieces 30 are disposed at one side of two sides of the inner film 12, the side with the electric pieces 30 is bonded with the encasing film 13; the electric pieces 30 are positioned between the inner film 12 and the encasing film 13; in the present invention, the electric pieces 30 are clamped and fixed by the inner film 12 and the encasing film 13, the electric pieces 30 decides whether to dispose encasing film 13 on the side surface of the inner film 12 or not; if the side surface is disposed with electric pieces 30, the encasing film 13 is disposed; if not, the encasing film 13 is not disposed.

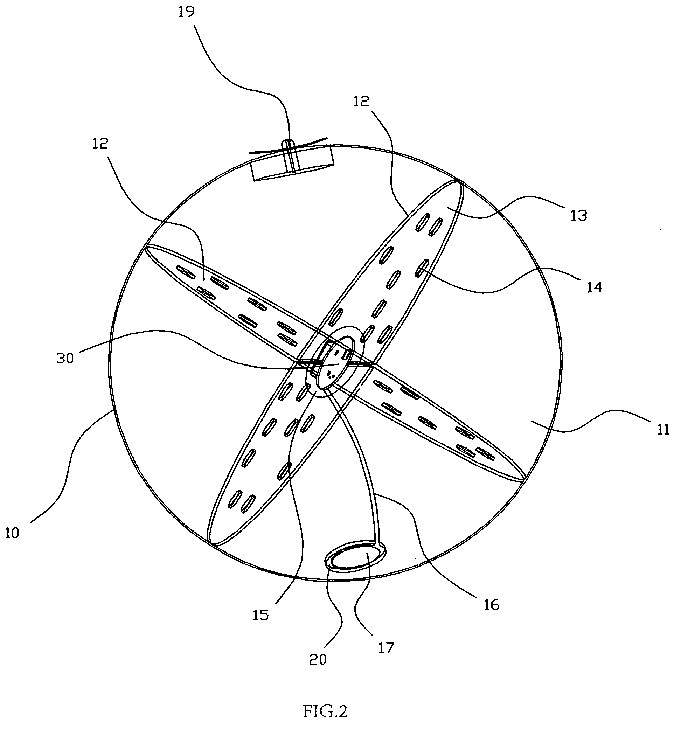

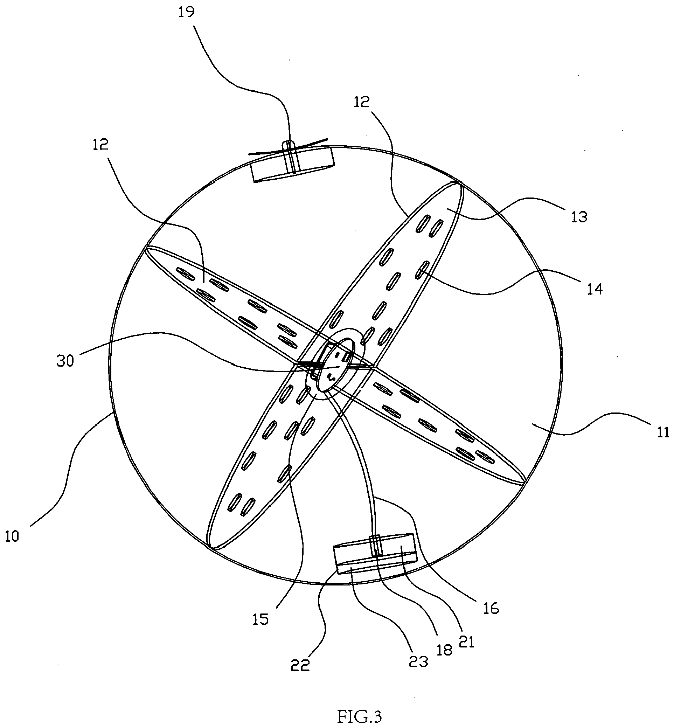

A ball surface 11 is connected between two adjacent film sheets, the ball surfaces 11 form the ball inner container 10. In the present invention, the X shaped support divides the ball space of the inner container 10 to fours parts, which can be regarded as four quadrants, four ball surfaces 11 are provided correspondingly, each ball surface 11 corresponds to a quadrant, the inner film 12 is disposed at the center surface of the inner container 10. The recharging component is connected to the electric pieces 30 by wires 16, the air nozzle 19 and the recharging component are respectively disposed to the inner container 10, as figured in FIG.2 and FIG.3. In a detailed embodiment, the inner film 12 and the encasing film 13 are applied with the same material, which is TPU in this embodiment.

In this embodiment, as figured in FIG.1, the inner film 12 and the encasing film 13 are all bonded, that is to say, the encasing 13 is completely bonded to the inner film 12, forming and assembly chamber 15. The electric pieces 30 are disposed in the assembly chamber 15. In detailed embodiment, the size of the encasing film 13 is larger than the area of the electric pieces 30, such to coating the electric pieces 30 from the periphery, the encasing film 13 can be various shapes.

In this embodiment, the edge of the inner film 12 is completely contacted with the inner container, to ensure that wherever the air nozzle 19 is positioned in the ball, the inner container 10 can be inflated, the inner film 12 is disposed with a plurality of air holes 14, the encasing film 13 is disposed with coinciding air holes 14 correspondingly. That is to say, no gap exists between the edge of the inner film 12 and the inner container 10, when inflating the inner container, air flows from the chamber with air nozzle 19 to the other chamber by air holes 14.

On the contrary, air gap exists between the edge of the inner film 12 and the inner container 10, such that the air holes 14 are not needed, when inflating the inner container, air flows from the chamber with air nozzle 19 to the other chamber through the air gaps. The inner film 12 are of various shape only if the corners of the inner film 12 can be connected to the inner container 10 and air gaps exist between the inner film and the inner container 10.

To enhancing the bonding performance of the encasing film 13, the electric pieces 30 need to increase their thickness. In the present invention, the electric pieces are patch structure, comprising patch rechargeable battery and the circuit board, the battery is arranged at the periphery of the circuit board or the bottom surface, forming thin electric pieces 30. In case that the electric pieces 30 occupy the same area, thinner the electric pieces 30 are, larger the bonding area between the inner film 12 and the encasing film 13 is, and better the bonding effect is.

To reduce the manufacturing processes, the electric pieces 30 are not connected to the inner film 12 and the encasing film 13, but positioned by the clamp of the inner film 12 and the encasing film 13. During the manufacturing, the electric pieces 30 needn't to be bonded, the electric pieces 30 are only needed to put on the inner film 12 and the encasing film 13 is directly bonded to the inner film 12 such to position the electric pieces 30.

The present invention applies wireless recharging. In this embodiment, the recharging component is an induction coil 17 for wireless recharging. As the inner film 10 is completely bonded to the encasing film 13, wires 16 is directly leading out of the electric pieces 30; to ensure the sealing of the inner container 10 and the elasticity of the ball, the induction coil 17 is assembled on the inner surface of the inner container 10, correspondingly, the inner surface of the inner container 10 is disposed with a concave assembly hole 20, the induction coil 17 is positioned in the assembly hole 20, as figured in FIG.2.

The present invention can apply wired recharging, in this embodiment, the recharging component is a recharging joint 18, the inner container 10 is disposed with a fixing base 21 extending inwardly, the recharging joint 18 is disposed in the fixing base 21; the surface of the fixing base 21 is lower than the external surface of the inner container 10, forming a concave hole 22, the concave hole 22 is assembled with an elastic plug cover 23, the structure of which is similar to the air nozzle 19, ensuring that the elasticity of the ball is not influenced at the position assembled with the elastic plug cover 23. The elastic plug cover 23 solves the problem that the elasticity at this position of the concave hole 22 is weak and avoids that the elasticity at the position of the recharging joint 18 is weak, the elasticity balance of the whole ball is ensured, as figured in FIG.3.

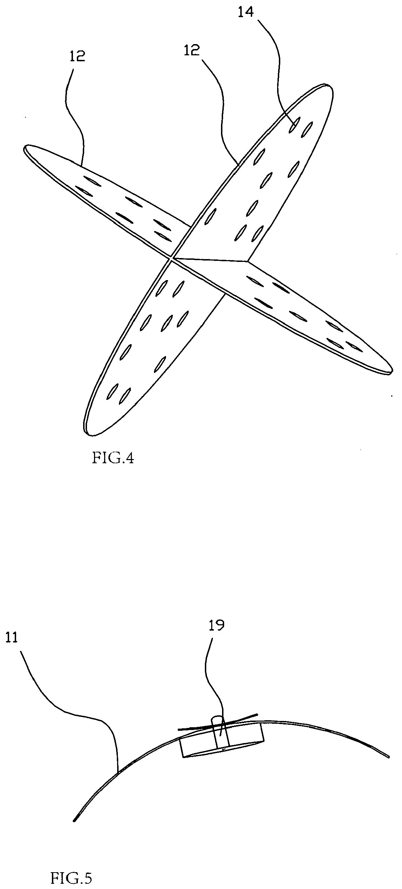

The present invention further provides with a manufacturing method of an intelligent ball with multiple airbags, which comprises following steps:
1) connecting a plurality of inner films 12 along the center line, forming multiple film sheets of radial shape when open, as figured in FIG.4, in this embodiment, there are to inner films 2 forming four film sheets after connected and open, forming a cross support of X shape.
2) putting electric pieces 30 on the inner film 12, contacting an encasing film 13 on one side of the electric pieces 30, positioning the electric pieces 30 between the inner film 12 and the encasing film 13; the electric pieces 30 decides whether to dispose encasing film 13 on the side surface of the inner film 12 or not; if the side surface is disposed with electric pieces 30, the encasing film 13 is disposed; if not, the encasing film 13 is not disposed.

To reduce the manufacturing processes, the electric pieces 30 are not connected to the inner film 12 and the encasing film 13, but positioned by the clamp of the inner film 12 and the encasing film 13. During the manufacturing, the electric pieces 30 needn't to be bonded, the electric pieces 30 are only needed to put on the inner film 12 and the encasing film 13 is directly bonded to the inner film 12 such to position the electric pieces 30.

In this embodiment, the edge of the inner film 12 is completely contacted with the inner container 10, that is to say, the edge of the inner film 12 is completely connected to the inner surface of the inner container 10 in sealing way, the inner film 12 divides the inner container 10 to two chambers. To ensure that wherever the air nozzle 19 is positioned in the ball, the inner container 10 can be inflated, in this embodiment, there are two structures. One structure is that, the inner film 12 is disposed with a plurality of air holes 14, the encasing film 13 is disposed with coinciding air holes 14 correspondingly. When inflating the inner container, air flows between the two connected chambers through the air holes 14 to realize evenly inflating. The other structure is that: air gap exists between the edge of the inner film 12 and the inner container 10, the edge of the inner film 12 is not completely connected to the inner surface of the inner container, when inflating the inner container, air flows between the two connected chambers through the air gaps to realize evenly inflating. The inner film 12 are of various shape only if the corners of the inner film 12 can be connected to the inner container 10 and air gaps exist between the inner film and the inner container 10.

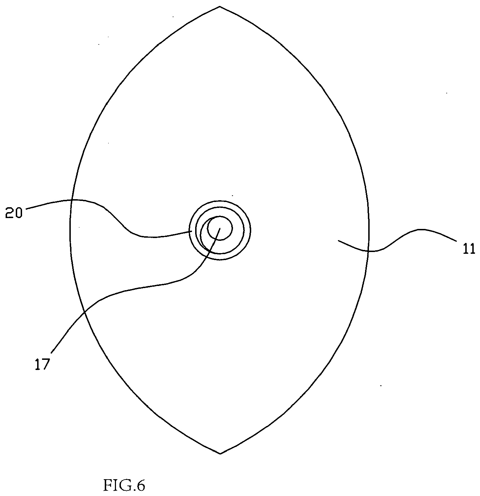

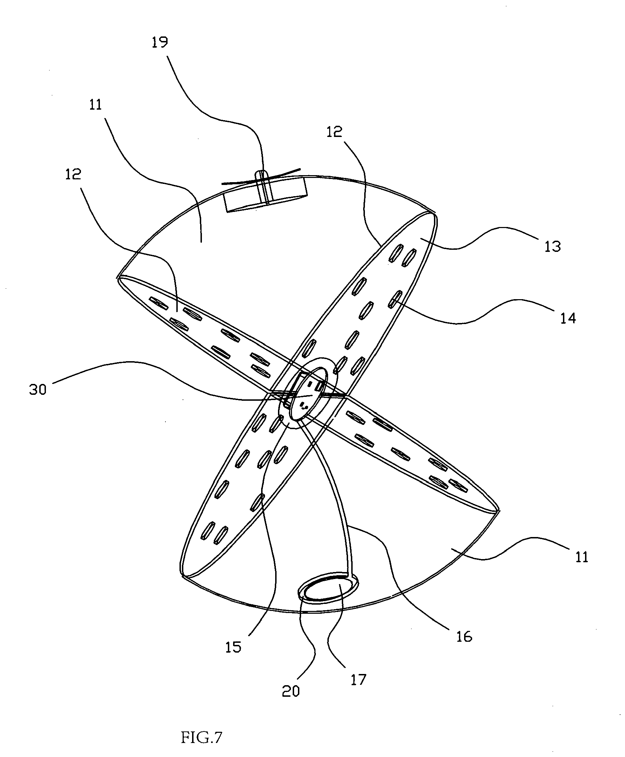

At the same time, the recharging component and the air nozzle 19 are positioned at different ball surfaces 11, as figured in FIG.5 and FIG.6, the recharging component is connected to the electric pieces 30 by wires. In this embodiment, the positions of both are opposite, forming weight balance.
3) putting the ball surface 11 between two adjacent film sheets, connecting the ball surfaces 11 along the edges, the edge of the inner film 12 is connected to the connecting position of two adjacent ball surfaces 11, as figured in FIG.7;
4) inflating the ball inner container 10 obtained from step 3), wrapping a leather layer. In step 4), the wrapping method can apply with traditional technology, as figured in FIG.2 and FIG.3. Based on the structure of this embodiment, in step 2), the encasing film 13 is contacted with the periphery of the inner film 12, forming an assembly chamber 15, the electric pieces 30 are disposed in the assembly chamber 15, after the electric pieces 30 are connected to the recharging component by wires, proceeding step 3).

The present invention applies wireless recharging. In this embodiment, the recharging component is an induction coil 17 for wireless recharging. As the inner film 10 is completely bonded to the encasing film 13, wires 16 is directly leading out of the electric pieces 30; to ensure the sealing of the inner container 10 and the elasticity of the ball, the induction coil 17 is assembled on the inner surface of the inner container 10, correspondingly, the inner surface of the inner container 10 is disposed with a concave assembly hole 20, the induction coil 17 is positioned in the assembly hole 20.

The present invention can apply wired recharging, in this embodiment, the recharging component is a recharging joint 18, the inner container 10 is disposed with a fixing base 21 extending inwardly, the recharging joint 18 is disposed in the fixing base 21; the surface of the fixing base 21 is lower than the external surface of the inner container 10, forming a concave hole 22, the concave hole 22 is assembled with an elastic plug cover 23, the structure of which is similar to the air nozzle 19, ensuring that the elasticity of the ball is not influenced at the position assembled with the elastic plug cover 23. The elastic plug cover 23 solves the problem that the elasticity at this position of the concave hole 22 is weak and avoids that the elasticity at the position of the recharging joint 18 is weak, the elasticity balance of the whole ball is ensured.

In the present invention, to achieve fast and stable bonding effect, and to avoid damaging the electric pieces 30 due to high temperature, the inner films 12, the inner film 12 and the encasing film 13, the ball surfaces 11, the recharging component and the inner container 10 are respectively high frequency bonded therebetween.

The invention may be summarized as follows: The present invention is provided with an intelligent ball with multiple airbags that the inner container is disposed with inner films, the inner film is used to fix the electric pieces. The electric pieces are clamped by the connecting of the inner film and the encasing film, such that the electric pieces are assembled in the ball, particularly at the central position of the inner container even in the center, such that the ball doesn't need to weight balance, the weight center is balanced. The electric pieces needn't to bonded between the inner film and the encasing film, the manufacturing steps are reduced, the manufacturing efficiency is improved. The present invention further provides with a manufacturing method that the inner container is manufactured by overlapping and bonding, the inner films, the inner film and the encasing film, the ball surfaces, the recharging component and the inner container are respectively high frequency bonded therebetween to achieve fast and stable bonding effect, and to avoid damaging the electric pieces due to high temperature during manufacturing, the safety factor is improved.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

## Claims

1. An intelligent ball with multiple airbags, comprising an inner container, an outer leather layer, wherein the inner container is disposed with at least two inner films, the inner container comprises a plurality of ball surfaces, the inner films are connected to an integral structure along the center line to form a plurality of film sheets of radial shape along the center line, two adjacent film sheets are connected by a ball surface, all the ball surfaces form the ball inner container; the electric pieces are disposed on the surface of the inner film, an encasing film is bonded to the surface of the inner film with the electric pieces; the electric pieces are positioned between the inner film and the encasing film; the recharging component is connected to the electric pieces by wires, an air nozzle and the recharging component are respectively disposed to the inner container.

2. The intelligent ball with multiple airbags according to claim 1, wherein the edge of the inner film is completely contacted with the inner container, the inner film is disposed with a plurality of air holes, the encasing film is disposed with coinciding air holes correspondingly.

3. The intelligent ball with multiple airbags according to claim 1 and/or 2, wherein air gaps are formed between the edge of the inner film and the inner container.

4. The intelligent ball with multiple airbags according to any one or more of claims 1 to 3, wherein the electric pieces are patch structure, the battery is arranged at the periphery or the bottom surface of the circuit board.

5. The intelligent ball with multiple airbags according to any one or more of claims 1 to 4, wherein the electric pieces are not connected nor fixed to the inner film or the encasing film but are positioned by the clamp of the inner film and the encasing film.

6. The intelligent ball with multiple airbags according to any one or more of claims 1 to 5, wherein the encasing film is contacted with the periphery of the inner film and forming an assembly chamber, the electric pieces are disposed in the assembly chamber.

7. The intelligent ball with multiple airbags according to any one or more of claims 1 to 6, wherein the recharging component is an induction coil for wireless recharging, the surface of the inner container is concaved with an assembly hole, the induction coil is positioned in the assembly hole.

8. The intelligent ball with multiple airbags according to any one or more of claims 1 to 6, wherein the recharging component is a recharging joint, the inner container is disposed with a fixing base extending inwardly, the recharging joint is disposed in the fixing base; the surface of the fixing base is lower than the external surface of the inner container and forming a concave hole, the concave hole is assembled with an elastic plug cover.

9. A manufacturing method of an intelligent ball with multiple airbags, wherein comprising following steps:
1) connecting a plurality of inner films along the center line, forming multiple film sheets of radial shape when open;
2) putting electric pieces on the inner film, contacting an encasing film on one side of the electric pieces, positioning the electric pieces between the inner film and the encasing film; positioning air nozzle and recharging component to a ball surface; connecting the recharging component and the electric pieces by wires;
3) putting the ball surface between two adjacent film sheets, connecting the ball surfaces along the edges, the edge of the inner film is connected to the connecting position of two adjacent ball surfaces;
4) inflating the ball inner container obtained from step 3), wrapping a leather layer.

10. The manufacturing method according to claim 9, wherein in step 2), the edge of the inner film is completely contacted with the inner container; the inner film is disposed with a plurality of air holes, the encasing film is disposed with coinciding air holes correspondingly; or in step 2), air gap is formed between the edge of the inner film and the inner container.

11. The manufacturing method according to claim 9 and/or 10, wherein in step 2), the encasing film is contacted with the periphery of the inner film and forming an assembly chamber, the electric pieces are disposed in the assembly chamber; after the electric pieces and the recharging component are connected by wire, proceeding step 3).

12. The manufacturing method according to any one or more of claims 9 to 11, wherein the recharging component is an induction coil for wireless recharging, the surface of the inner container is concaved with an assembly hole, the induction coil is positioned in the assembly hole.

13. The manufacturing method according to any one or more of claims 9 to 11, wherein the recharging component is a recharging joint, the inner container is disposed with a fixing base extending inwardly, the recharging joint is disposed in the fixing base; the surface of the fixing base is lower than the external surface of the inner container and forming a concave hole, the concave hole is assembled with an elastic plug cover.

14. The manufacturing method according to any one or more of claims 9 to 13, wherein the inner films, the inner film and the encasing film, the ball surfaces, the recharging component and the inner container are respectively high frequency bonded therebetween.
